# EUROPEAN PATENT APPLICATION

(11) **EP 4 841 708 A1**
(43) Date of publication of application: **18.11.2026**
(21) Application number: 26178182.7
(22) Date of filing: 12.05.2026
(51) Int. Cl.: H01M 4/38, H01M 4/36, H01M 4/62, H01M 4/134, H01M 4/1395, H01M 10/0525, H01M 4/02

(54) **NEGATIVE ELECTRODE ACTIVE MATERIAL FOR RECHARGEABLE LITHIUM BATTERY AND RECHARGEABLE LITHIUM BATTERY INCLUDING THE NEGATIVE ELECTRODE ACTIVE MATERIAL**

(30) Priority: 14.05.2025 KR 20250062587
(71) Applicant: SAMSUNG SDI CO., LTD., Yongin-si, Gyeonggi-do 17084 (KR)
(72) Inventor: KIM, Jae Won, 16678 Suwon-si, Gyeonggi-do (KR); LEE, Ban Seok, 16678 Suwon-si, Gyeonggi-do (KR); KANG, Eun Ji, 16678 Suwon-si, Gyeonggi-do (KR); KIM, Deok Hyun, 16678 Suwon-si, Gyeonggi-do (KR); KIM, Young Ugk, 16678 Suwon-si, Gyeonggi-do (KR); NAH, Jae Hou, 16678 Suwon-si, Gyeonggi-do (KR)
(74) Representative: Michalski Hüttermann & Partner mbB

(57) **Abstract**

The negative electrode active material includes a silicon-carbon composite including secondary particles that are assemblies of monocrystalline silicon nanoparticles and amorphous carbon. The silicon-carbon composite has an oxygen content of 4.0 wt% or less, and the monocrystalline silicon nanoparticles have a D50 average size of 30 nm or less.

## Description

### CROSS-REFERENCE TO RELATED APPLICATION

The present application claims priority and the benefit of Korean Patent Application No.10-2025-0062587, filed on May 14, 2025, in the Korean Intellectual Property Office.

### BACKGROUND

### 1. Field of the Disclosure

The present disclosure relates to a negative electrode active material for a rechargeable lithium battery, and a rechargeable lithium battery including the negative electrode active material.

### 2. Discussion of Related Art

With the rapid spread of electronic devices using batteries, such as mobile phones, notebook computers, and electric vehicles, the demand for secondary batteries having high energy density and high capacity has rapidly increased. Accordingly, research and development for improving the performance of rechargeable lithium batteries has been conducted.

A rechargeable lithium battery includes a positive electrode and a negative electrode that contain an active material capable of the intercalation and deintercalation of lithium ions. A rechargeable lithium battery produces electrical energy by oxidation and reduction reactions when the lithium ions are intercalated into and deintercalated from the positive electrode and the negative electrode.

### SUMMARY OF THE DISCLOSURE

The present disclosure is directed to providing a negative electrode active material for a rechargeable lithium battery, with the negative electrode active material exhibiting a low oxygen concentration, an improved specific capacity, improved initial efficiency, and a long lifespan.

The present disclosure is also directed to providing a rechargeable lithium battery that includes the negative electrode active material for a rechargeable lithium battery.

One aspect of the present disclosure provides a negative electrode active material for a rechargeable lithium battery.

The negative electrode active material for a rechargeable lithium battery includes a silicon-carbon composite that includes secondary particles and amorphous carbon, the secondary particles are assemblies of monocrystalline silicon nanoparticles, wherein the silicon-carbon composite has an oxygen content of 4.0 wt% or less, and the monocrystalline silicon nanoparticles have a D50 average size of 30 nm or less.

Another aspect of the present disclosure provides a rechargeable lithium battery that includes a negative electrode including the negative electrode active material for a rechargeable lithium battery and a positive electrode.

The negative electrode active material for a rechargeable lithium battery according to an embodiment may have a low oxygen concentration, an improved specific capacity, an improved initial efficiency, and a long lifespan. Thus, the negative electrode active material provides for a reliable rechargeable lithium battery.

### BRIEF DESCRIPTION OF THE DRAWINGS

The above and other objects, features, and advantages of the present disclosure will become more apparent to those of ordinary skill in the art by the embodiments described below with reference to the accompanying drawings.
FIGS. 1 to 4 are cross-sectional views of rechargeable lithium batteries according to embodiments; and
FIG. 5 shows a scanning electron microscope (SEM) image of a negative electrode active material prepared in Example 1.

### DETAILED DESCRIPTION OF EXEMPLARY EMBODIMENTS

Hereinafter, embodiments of the present disclosure will be described in detail. However, these are presented as examples, and the present disclosure is not limited to the examples.

Unless otherwise specified herein, when a part such as a layer, a film, a region, or a plate is described as being "on" another part, this includes only a case where the part is "directly on" the other part and also a case where still another part is present therebetween.

Unless particularly stated otherwise, what is expressed in the singular may also include the plural. Unless otherwise specified, "A or B" may mean "including A, including B, or including A and B".

In the specification, "combination thereof" may mean a mixture, laminate, composite, copolymer, alloy, blend, and reaction product of components.

In the specification, "particle size (D50)," "D50 average size," and "D50 average particle size" refer to an average particle size indicating the size of particles with a cumulative volume of 50 vol% in the particle size distribution. Particle size distribution may be measured by a method widely known to those of ordinary skill in the art. For example, the particle size distribution may be measured using a particle size analyzer, or by transmission electron microscopy or scanning electron microscopy. As another method, by using a measuring device that uses dynamic light-scattering, particle size may be measured using dynamic light-scattering, the number of particles may be counted for each particle size range through data analysis, and the D50 value may be obtained by being calculated from this. Alternatively, the number of particles may be measured using a laser diffraction method. When measuring by laser diffraction, particles to be measured may be dispersed in a dispersion medium, irradiated with approximately 28 kHz ultrasonic waves at an output of 60 W by introducing it into a commercially available laser diffraction particle size measuring device (e.g., Microtrac MT 3000), and D50 may be calculated based on 50vol% of the particle size distribution using the measuring device.

For a particle that is spherical, size means the diameter. The size may be measured using a particle size analyzer (LS 13 320 XR from Beckman Coulter, Inc.).

The negative electrode active material for a rechargeable lithium battery according to an embodiment may be a silicon-carbon composite, and have a low oxygen concentration, an improved specific capacity, improved initial efficiency, and a long lifespan. The negative electrode active material thereby provides for a reliable rechargeable lithium battery.

In an embodiment, the silicon-carbon composite may be a two-component negative electrode active material including silicon (Si) and amorphous carbon.

The negative electrode active material may include a silicon-carbon composite that includes secondary particles (hereinafter, may also be referred to as 'secondary silicon particles') in which monocrystalline silicon nanoparticles are assembled and amorphous carbon, wherein the silicon-carbon composite has an oxygen content of 4.0 wt% or less.

The silicon-carbon composite may have an oxygen content of 4.0 wt% or less. Because lithium ions have a low reactivity with oxygen, battery capacity and specific capacity may be increased, and the risk of battery explosion in the event of a fire can be reduced. In some examples, the silicon-carbon composite may have an oxygen content of 0 to 4.0 wt%, for example, 0, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0. 3.1, 3.2, 3.3, 3.4, 3.5, 3.6, 3.7, 3.8, 3.9. 4.0 wt%, 0.1 to 4.0 wt%, or 3.0 to 4.0 wt%.

In the silicon-carbon composite, the monocrystalline silicon nanoparticles have a D50 average size of 30 nm or less. As such, wet milling is not needed in the preparation of the silicon-carbon composite and, thus, an oxygen content in the silicon-carbon composite may be reduced. In addition, within this D50 average size range, an empty space (void) in the composite is small due to assembly of the monocrystalline silicon nanoparticles. As a result, improved specific capacity, improved initial efficiency, and long lifespan may be provided to a battery including the silicon-carbon composite. In some examples, the D50 average size of the monocrystalline silicon nanoparticles may be more than 0 nm and 30 nm or less, 1 to 30 nm, 5 to 30 nm, or 10 to 30 nm, for example 0.1, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30 nm.

The monocrystalline silicon nanoparticles are primary particles. The size of the primary particles may be determined using a transmission electron microscope (TEM) image or a scanning electron microscope (SEM) image. As an alternative method, the size of the primary particles may be obtained by measuring using an instrument based on dynamic light scattering (DLS), counting the number of particles in each particle size range through data analysis, and calculating from the resulting values.

The monocrystalline silicon nanoparticles may be prepared by passing a silicon raw material through a plasma region with a temperature of 10,000 °C or more to vaporize the silicon raw material, cooling, and precipitating. But the present disclosure is not limited to this method.

The monocrystalline silicon nanoparticles are assembled to form secondary particles. That is, the monocrystalline silicon nanoparticles are primary particles, and these primary particles may be integrated into a silicon-carbon composite in the form of secondary particles that are agglomerations of primary particles. Therefore, the silicon-carbon composite may include secondary particles that are assemblies of monocrystalline silicon nanoparticles.

In some embodiments, the size of the secondary silicon particles may be 2 to 15 µm or 5 to 10 µm. The D50 average size of the primary particles may be 30 nm or less. When the average sizes of the secondary particles and the primary particles fall within these ranges, lithium ions may be easily dispersed into the negative electrode active material, and electric resistance and rate characteristics of a battery may be improved.

The monocrystalline silicon nanoparticles may be flaky or spherical, but the present disclosure is not particularly limited to such shapes. In some embodiments, the secondary particles, which are agglomerations of primary particles, are spherical.

The inter-particle spacing between the monocrystalline silicon nanoparticles may be 5 nm or less. Within this range, the volume of pores present inside the silicon-carbon composite may be reduced and the inter-particle spacing between the monocrystalline silicon nanoparticles may be reduced. As such, the permeation of an electrolyte into the core during the operation of a battery may be prevented. And, as a result, side reactions between the electrolyte and the negative electrode active material may be inhibited, which thereby improves the lifespan of a battery.

In some embodiments, the monocrystalline silicon nanoparticles are monocrystalline particles having a D50 grain size of 30 nm or less, for example, 25 nm or less, for example 0.1, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30 nm. Within these ranges, battery capacity may be improved. In some examples, the grain size of the monocrystalline silicon nanoparticles may be 25 nm or less, for example, more than 0 nm and 25 nm or less, 1 to 25 nm, 5 to 25 nm, or 10 to 25 nm.

A difference between the D50 average size of the monocrystalline silicon nanoparticles and the D50 grain size of the monocrystalline silicon nanoparticles may be 3 nm or less, for example, 0, 1, 2, 3 nm 0 to 3 nm. Within this range, a long lifespan may be provided in a battery.

The monocrystalline silicon nanoparticles may be included at 50 to 95 wt%, for example, 50,51,52,53,54,55,56,57,58,59,60,61,62,63,64,65,66,67,68,69,70 ,71,72,73,74,75,76,77,78,79,80,81,82,83,84,85,86,87,88,89,90,9 1,92,93,94,95 wt%, 50 to 90 wt%, 50 to 80 wt%, or 50 to 60 wt% of the silicon-carbon composite. Within these ranges, battery capacity may be enhanced.

The amorphous carbon may be soft carbon, hard carbon, mesophase pitch carbon, calcined coke, or a combination thereof. The amorphous carbon may be included at 5 to 50 wt%, for example
5,6,7,8,9,10,11,12,13,14,15,16,17,18,19,20,21,22,23,24,25,26,2 7,28,29,30,31,32,33,34,35,36,37,38,39,40,41,42,43,44,45,46,47, 48,49,50 wt%, 10 to 50 wt%, 20 to 50 wt%, or 40 to 50 wt% of the silicon-carbon composite. Within these ranges, battery capacity may be improved.

The silicon-carbon composite may include a core including secondary particles in which monocrystalline silicon nanoparticles are assembled. The silicon-carbon composite further includes an amorphous carbon layer surrounding the core. The silicon-carbon composite may have an oxygen content of 4.0 wt% or less, and the monocrystalline silicon nanoparticles may have a D50 average size of 30 nm or less.

The core may further include amorphous carbon. When the amorphous carbon is contained in the core, a side reaction with an electrolyte may be inhibited by reducing the pore volume of the silicon-carbon composite. In addition, when the monocrystalline silicon nanoparticles in the silicon-carbon composite expand, such expansion may be buffered, which thereby suppresses battery swelling. Further, as the amorphous carbon serves as a binder, cracking of the silicon-carbon composite may be reduced to maintain the shape of the composite.

The amorphous carbon may be soft carbon, hard carbon, mesophase pitch carbon, calcined coke, or a combination thereof, and may be a compound that is the same as or different from the amorphous carbon contained in the core. The amorphous carbon layer may have a thickness of 1 to 900 nm, for example, 5 to 800 nm. This makes it possible to reduce the specific surface area of the silicon-carbon composite and prevent an electrolyte from permeating into the negative electrode active material. As a result, side reactions with an electrolyte may be minimized and the lifespan characteristics of a battery may be improved.

The D50 average size of the silicon-carbon composite may be 2 to 15 µm, for example, 3 to 13 µm, 5 to 10 µm, or 6 to 8.5 µm. Within these ranges, lithium ions may be easily dispersed into the composite, and battery resistance and rate characteristics may be improved. In addition, an excessive increase in specific surface area of the composite may be inhibited, thereby reducing side reactions with an electrolyte.

Hereinafter, a method of preparing the silicon-carbon composite according to an embodiment will be described. The preparation method may include preparing a dispersion by dispersing monocrystalline silicon nanoparticles in a dispersion solvent, preparing secondary silicon particles in which the monocrystalline silicon nanoparticles are assembled by spray-drying the dispersion, and preparing the silicon-carbon composite by mixing the secondary silicon particles with an amorphous carbon precursor and thermally treating the resulting mixture.

The preparation method does not include preparing silicon nanoparticles by milling conventional silicon precursor particles in a wet dispersion solvent. The preparation method uses monocrystalline silicon nanoparticles instead of silicon precursor particles, and the method allows the monocrystalline silicon nanoparticles to have a D50 average size of 30 nm or less.

A preparation method may include preparing a silicon-carbon composite that has a low oxygen concentration, are easily processable, and economically feasible. When the oxygen concentration in the negative electrode active material is high, lithium ions may react with oxygen during charging and discharging of a battery, which thereby reduces battery capacity and increases the risk of battery explosion due to a fire. The oxygen in the negative electrode active material may be incorporated into a in several steps of the operation of preparing a negative electrode active material, but oxygen is most likely to be incorporated during milling of silicon precursor particles.

Hereinafter, the preparation method of the present disclosure will be described in detail.

A dispersion is prepared by dispersing monocrystalline silicon nanoparticles in a dispersion solvent. The monocrystalline silicon nanoparticles may be as described above. The dispersion solvent may include one or more of a solvent with oxygen and a solvent without oxygen. The solvent with oxygen may be one or more of ethanol and isopropanol. The solvent without oxygen may be n-hexane. The dispersion solvent may be included at a suitable amount with respect to the monocrystalline silicon nanoparticles. In one embodiment, the concentration of the monocrystalline silicon nanoparticles in the dispersion may be 10 to 30 wt%.

Secondary silicon particles that are agglomerations of monocrystalline silicon nanoparticles may be prepared by spray-drying the dispersion. The secondary silicon particles may have an oxygen content of 7.0 wt% or less, for example, 0 to 7.0 wt%, or 5.0 to 7.0 wt%. Within these ranges, it may be easy to prepare the silicon-carbon composite. With the spray-drying, the monocrystalline silicon nanoparticles may be assembled into secondary particles in a micrometer size. The secondary particles may also include pores such as spacing between monocrystalline silicon nanoparticles.

The sphericity of the prepared silicon-carbon composite may be adjusted by selection of a nozzle type and an atmosphere that are used in the spray drying. For example, a two-fluid nozzle can be used to form fine particles by mixing a liquid and a gas. When a two-fluid nozzle is used, fine and spherical particles may be formed. Because the size of the formed particles is small, an additional grinding process is not needed and the particles may be maintained in a spherical form. When a rotary atomizing disk nozzle is used as the nozzle, macro particles may be formed, and an additional grinding process may be needed due to the large particle size. As such, various forms of particles, such as spherical, oval and donut-shaped particles, are formed. Thus, the rotary atomizing disk nozzle for spray drying may not be suitable.

The spray drying may be performed under a nitrogen atmosphere, for example, while introducing (blowing) nitrogen at a flow rate of 30 L/min to 50 L/min, or at a flow rate of 30 L/min to 40 L/min. When the flow rate of nitrogen falls within these range, spherical microparticles with an appropriate size may be formed. When the flow rate of nitrogen is below 30 L/min, the products being sprayed may re-agglomerate, resulting in an increase in the particle size of the prepared particles, which may be undesirable. When the flow rate exceeds 50 L/min, there may be problems that the particle size of the prepared particles is too small and excessive fine particles are generated.

The spray drying may be performed at 50 to 200 °C. When the spray drying is performed in this temperature range, the temperature is a sufficiently higher temperature than the boiling point of the dispersion solvent, and sufficiently dry microscale spherical Si particles may be formed through instantaneous evaporation. In some examples, the spray drying may be performed at 50 to 170 °C.

The silicon-carbon composite may be prepared by mixing the secondary silicon particles and an amorphous carbon precursor and thermally treating the resulting mixture.

The amorphous carbon precursor may be a polyimide-based resin, a furan resin, a phenol resin, a polyvinyl alcohol resin, a poly(meth)acrylic acid resin, a polyurethane resin, a cellulose resin, an epoxy resin, a polystyrene resin, petroleum pitch, coal tar pitch, green coke, mesophase pitch, a coal-based oil, petroleum heavy oil, coke, or a combination thereof.

A weight ratio of the secondary silicon particles to the amorphous carbon precursor may be 20:80 to 99:1 with respect to a total of 100 parts by weight. Within this range, it is possible to prepare a silicon-carbon composite with excellent battery capacity. In some examples, the weight ratio is 50:50 to 99:1, 50:50 to 96:4, or 57:43.

The thermal treatment may be performed at 400 to 1200 °C, 700 to 1000 °C, or 900 to 1000 °C. When the thermal treatment is performed within these temperature ranges, the silicon-carbon composite may be maintained in a spherical shape. Further, as the amorphous carbon is carbonized, the conductivity of the silicon-carbon composite may be enhanced, and the initial efficiency of a battery may be improved.

The thermal treatment may be performed in an nitrogen atmosphere. Through the thermal treatment process, the amorphous carbon precursor may be converted into the amorphous carbon, which may be included as amorphous carbon in the silicon-carbon composite.

The mixing with the amorphous carbon precursor and thermal treatment of the resulting mixture may be performed one or more times. For example, the mixing with the amorphous carbon precursor and thermal treatment of the resulting mixture may be performed twice.

Before the thermal treatment, the secondary silicon particles and the amorphous carbon precursor may be mixed and then pressed and molded. The pressing and molding may reduce pores in the silicon-carbon composite and reduce the specific surface area, thereby inhibiting side reactions between the silicon-carbon composite and an electrolyte.

### Rechargeable lithium battery

Hereinafter, a rechargeable lithium battery is described. The rechargeable lithium battery includes a negative electrode including the negative electrode active material for the rechargeable lithium battery and a positive electrode.

The negative electrode may include a current collector and a negative electrode active material layer on the current collector. Here, the negative electrode active material layer may be as described above.

In specific examples, the negative electrode active material may comprise at least 95 wt%, for example, 95 to 100 wt%, of the total negative electrode active material within the negative electrode active material layer. In addition to the negative electrode active material (the first negative electrode active material), the negative electrode active material layer may further comprise a different negative electrode active material (the second negative electrode active material).

The negative electrode for a rechargeable lithium battery may include a current collector and a negative electrode active material layer on the current collector. The negative electrode active material layer may include a negative electrode active material and may further include a binder and/or a conductive material (e.g., an electrically conductive material). For example, the negative electrode active material layer may include about 90 wt% to about 99 wt% of the negative electrode active material, about 0.5 wt% to about 5 wt% of the binder, and about 0 wt% to about 5 wt% of the conductive material.

The first negative active material includes the negative active material as described above. In a specific example, the first negative active material may be included in an amount of 95 wt% or more, for example, 95 to 100 wt%, or 100 wt%, of the total negative active material in the negative active material layer.

The second negative electrode active material may include a material that reversibly intercalates/deintercalates lithium ions, a lithium metal, a lithium metal alloy, a material capable of doping/dedoping lithium, or a transition metal oxide, in addition to the negative active material according to the above-described embodiment.

The material that reversibly intercalates/deintercalates lithium ions may include a carbon-based negative electrode active material, such as crystalline carbon, amorphous carbon, or a combination thereof. The crystalline carbon may be graphite such as non-shaped, sheet-shaped, flake-shaped, sphere-shaped, or fiber-shaped, natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx (0 < x < 2), a Si-Q alloy, and a combination thereof. In the formula Si-Q, Q is selected from among an alkali metal, an alkaline-earth metal, a Group 13 element, a Group 14 element (excluding Si), a Group 15 element, a Group 16 element, a transition metal, a rare earth element. The Sn-based negative electrode active material may include Sn, SnO₂, a Sn-based alloy, or a combination thereof.

The silicon-carbon composite may be a composite of silicon and amorphous carbon. The silicon-carbon composite may be in a form of silicon particles and amorphous carbon coated on the surface of the silicon particles. For example, the silicon-carbon composite may include secondary particles (core) that are agglomerations of primary silicon particles, and an amorphous carbon coating layers (shell) on the surfaces of the secondary particle. The amorphous carbon may also be between the primary silicon particles, and, for example, the primary silicon particles may be coated with the amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

The binder may serve to attach the negative electrode active material particles to each other and also to attach the negative electrode active material to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity (e.g., electrical conductivity) to the electrode. Any material that does not cause an undesirable chemical change in the rechargeable lithium battery and that conducts electrons can be used in the battery. Non-limiting examples of the conductive material include a carbon-based material such as natural graphite, artificial graphite, carbon black, acetylene black, ketjen black, a carbon fiber, a carbon nanofiber, and a carbon nanotube; a metal-based material including copper, nickel, aluminum, silver, etc. in a form of a metal powder or a metal fiber; a conductive polymer such as a polyphenylene derivative; or a mixture thereof.

The negative current collector may include a copper foil, a nickel foil, a stainless steel foil, a titanium foil, a nickel foam, a copper foam, a polymer substrate coated with a conductive metal, or a combination thereof.

### Positive electrode

A positive electrode for a rechargeable lithium battery may include a current collector and a positive electrode active material layer on the current collector. The positive electrode active material layer may include a positive electrode active material and may further include a binder and/or a conductive material. The positive electrode may further include an additive that can serve as a sacrificial positive electrode.

The positive electrode active material may include a compound (lithiated intercalation compound) that is capable of intercalating and deintercalating lithium. Specifically, at least one of a composite oxide of lithium and a metal selected from among cobalt, manganese, nickel, and combinations thereof may be used.

The composite oxide may be a lithium transition metal composite oxide. Specific examples of the composite oxide include lithium nickel-based oxide, lithium cobalt-based oxide, lithium manganese-based oxide, lithium iron phosphate-based compound, cobalt-free nickel-manganese-based oxide, or a combination thereof.

As specific examples, the following compounds represented by any one of the following Chemical Formulas may be used as the positive electrode active material: LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{d}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); or LiₐFePO₄ (0.90≤a≤1.8). In these chemical formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode active material may be, for example, a high nickel-based positive electrode active material. Based on 100 mol% of the metal excluding lithium in the lithium transition metal composite oxide, the high nickel-based positive electrode active material may have a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol%. The high-nickel-based positive electrode active material may be capable of realizing high capacity and can be used in a high-capacity, high-density rechargeable lithium battery.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The binder serves to attach the positive electrode active material particles to each other and also to attach the positive electrode active material to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity (e.g., electrical conductivity) to the electrode. Any material that does not cause an undesirable chemical change in the rechargeable lithium battery and conducts electrons can be used in the battery. Examples of the conductive material include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

Aluminum may be used as the current collector, but is not limited thereto.

The rechargeable lithium battery may further include an electrolyte solution.

The electrolyte solution for a rechargeable lithium battery may include a non-aqueous organic solvent and a lithium salt.

The non-aqueous organic solvent may serve as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone or in combination of two or more.

In addition, when using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON^{®}, and polytetrafluoroethylene, or a copolymer or mixture of two or more thereof.

The organic material may include a polyvinylidene fluoride-based polymer or a (meth)acrylic polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

The rechargeable lithium battery may be cylindrical, prismatic, pouch, or coin-type batteries, and the like depending on its shape.

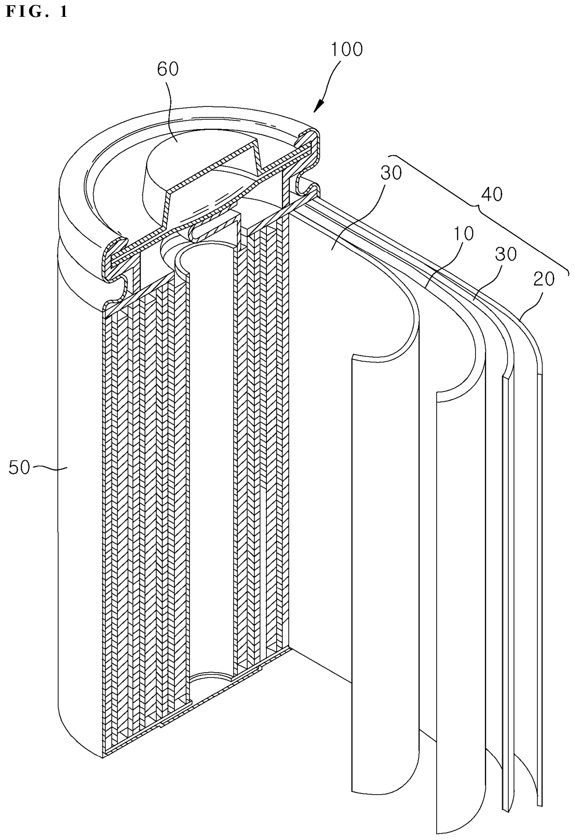

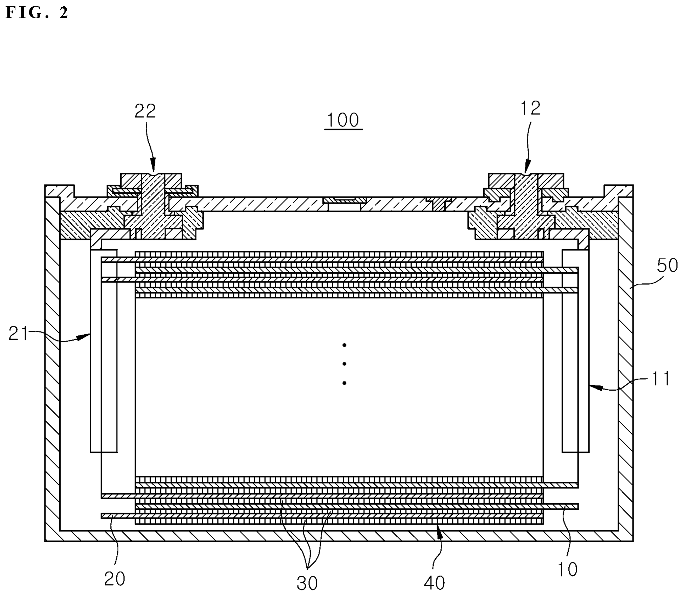

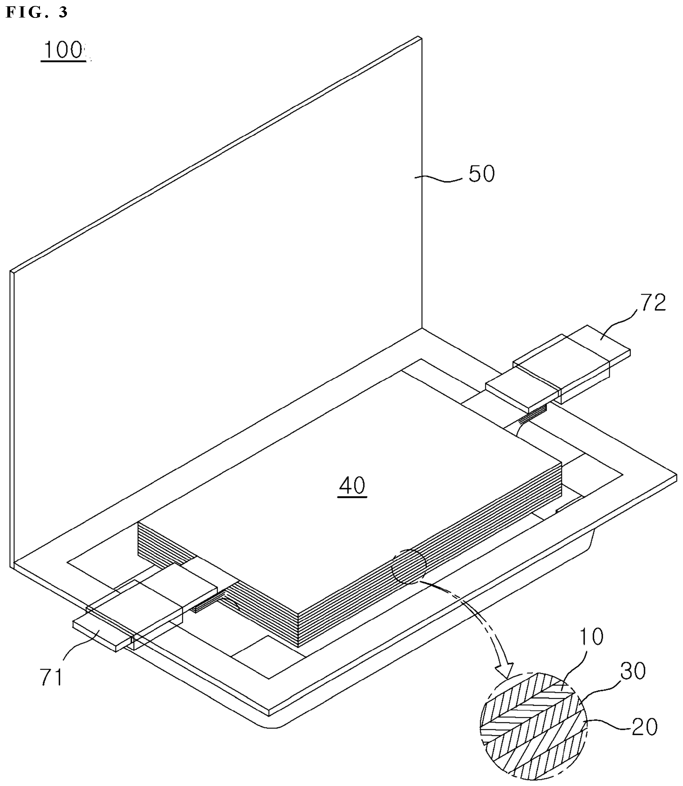

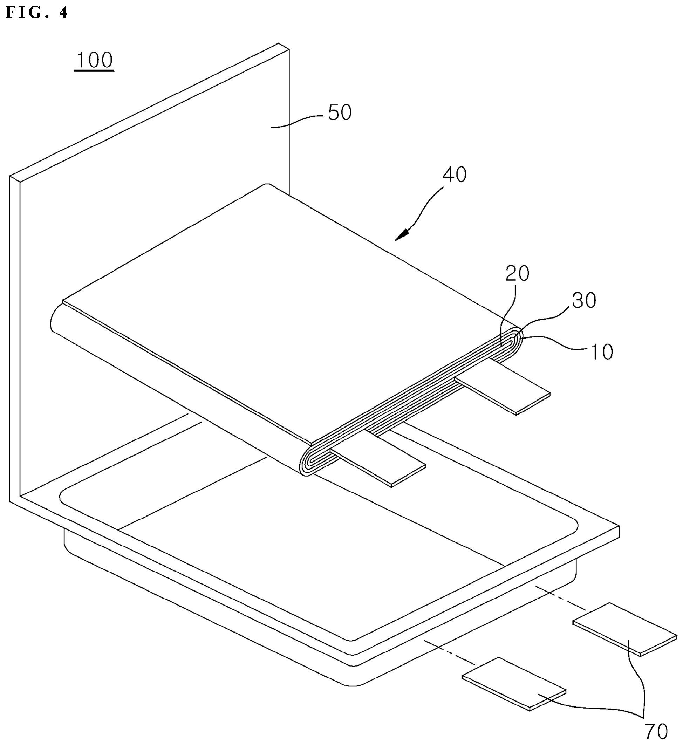

FIGS. 1 to 4 are schematic views of rechargeable lithium batteries according to embodiments of a present disclosure. FIG. 1 shows a cylindrical battery, FIG. 2 shows a prismatic battery, and FIGS. 3 and 4 show pouch-type batteries. Referring to FIGS. 1 to 4, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 1. In FIG. 2, the rechargeable lithium battery 100 may include a positive lead tab 11, a positive terminal 12, a negative lead tab 21, and a negative terminal 22. As shown in FIGS. 3 and 4, the rechargeable lithium battery 100 may include an electrode tab 70, which may be, for example, a positive electrode tab 71 and a negative electrode tab 72 serving as an electrical path for inducing the current formed in the electrode assembly 40 to outside of the rechargeable lithium battery.

The rechargeable lithium battery according to an embodiment may be used in automobiles, mobile phones, and/or various types of electric devices, as non-limiting examples.

Hereinafter, examples and comparative examples of the present invention will be described. However, the present disclosure is not limited to the examples and comparative examples.

### Example 1

A dispersion was prepared by dispersing monocrystalline silicon nanoparticles (primary particles, spherical) with the grain size shown in Table 1 below in ethanol as a dispersion solvent. Secondary silicon particles that are agglomerations of monocrystalline silicon nanoparticles were prepared by spray-drying the prepared dispersion at 170 °C.

A mixture was prepared by mixing the prepared secondary silicon particles and mesophase pitch in a weight ratio of 57:43 with respect to a total of 100 parts by weight. The prepared mixture was pressed and molded to prepare a molded body.

The molded body was thermally treated for 1 hour at 950 °C under a nitrogen atmosphere to carbonize the mesophase pitch, thereby preparing a silicon-carbon composite including amorphous carbon surrounding secondary silicon particles as a negative electrode active material.

### Examples 2 and 3

A negative electrode active material was prepared in the same manner as in Example 1, except that monocrystalline silicon nanoparticles with the grain sizes and a primary silicon particle size were used in Examples 2 and 3 shown in Table 1 below.

### Comparative Example 1

A polycrystalline silicon nanoparticle (primary particles, spherical) dispersion was prepared by mixing spherical polycrystalline silicon particles having a D50 average size of approximately 1 µm and ethanol, inputting the resulting mixture in a bead mill including zirconium balls (Germany, Netzsch), and milling the resulting mixture at 20 °C for 60 hours.

Secondary silicon particles in which polycrystalline silicon nanoparticles were assembled were prepared by spray-drying the prepared dispersion at 170 °C.

A mixture was prepared by mixing the prepared secondary silicon particles and mesophase pitch in a weight ratio of 57:43 with respect to a total of 100 parts by weight. The prepared mixture was pressed and molded into a molded body.

The molded body was thermally treated for 1 hour at 950 °C under a nitrogen atmosphere to carbonize the mesophase pitch, thereby preparing a negative electrode active material for a rechargeable lithium battery.

### Comparative Example 2

A negative electrode active material was prepared in the same manner as in Comparative Example 1 except that a molded body prepared in Comparative Example 1 was thermally treated at 1050 °C under a N₂ atmosphere.

### Comparative Examples 3 and 4

A negative electrode active material was prepared in the same manner as in Example 1, except that monocrystalline silicon nanoparticles (primary particles purchased from Sigma Aldrich) with the grain sizes shown in Table 2 below were used in Comparative examples 3 and 4.

### Comparative Examples 5 to 7

A negative electrode active material was prepared in the same manner as in Comparative Example 1, except that the milling time was changed as shown below in Comparative Example 1. For Comparative Example 5, the milling time was 12 hours, for Comparative Example 6, the milling time was 10 hours, and for Comparative Example 7, the milling time was 8 hours.

### (Experiment 1) Evaluation of negative electrode active material

### Oxygen concentration in silicon-carbon composite (wt%)

An oxygen concentration in a silicon-carbon composite was evaluated by solid-state infrared absorption spectroscopy. Specifically, to determine the oxygen concentration in the silicon-carbon composite, the composite was melted using an elemental analyzer (LECO, 0836) in an electrode furnace (graphite crucible, helium gas atmosphere) by electrode heating. Here, an oxide present in the sample reacts with the graphite crucible and is released as CO. The released CO gas was moved with a carrier gas (helium), and impurities were removed using a dust filter. The oxygen concentration was analyzed by measuring how much infrared light the captured CO absorbs using a non-dispersive infrared detector (NDIR).

### Oxygen concentration in secondary silicon particles (wt%)

An oxygen concentration was measured for secondary silicon particles in the same manner as described above in the process of measuring the oxygen concentration in the silicon-carbon composite.

### Crystallite size (i.e., grain size) of silicon nanoparticles (nm)

A crystallite size is obtained on the (111) plane on which a 20 value is shown between 27 and 29° through the Scherrer equation in X-ray diffraction analysis with CuKα radiation.

### Size of primary silicon particles (nm)

The size of primary silicon particles was measured using a transmission electron microscope (TEM) image or a scanning electron microscope (SEM) image. In addition, the size was further measured and complemented by using an instrument based on dynamic light scattering (DLS). When analyzing by DLS, the particles were dispersed in a solvent and agglomerated particles were separated by ultrasonic treatment. Afterward, the prepared sample was put into DLS equipment and the intensity of light scattered at specific angles (90° to 173°) was measured after irradiating the sample with a laser beam. The diffusion coefficient was obtained by calculating the velocity of particle motion, and the particle size was able to be determined by applying the Stokes-Einstein equation.

### Average size of silicon-carbon composite (µm)

A D50 average size was measured by a method widely known to those of ordinary skill in the art, for example, using a particle size analyzer, or a TEM or SEM image. The D50 average size was also measured using a laser diffraction method. More specifically, after dispersing the particles to be measured in a dispersion medium, a commercially available lase diffraction particle size analyzer (e.g., MT 3000 (Microtrac)) was used. Subsequently, ultrasound at approximately 28 kHz and an output of 60 W was applied, and the D50 average particle size based on 50% of the size distribution was able to be calculated using the measurement device.

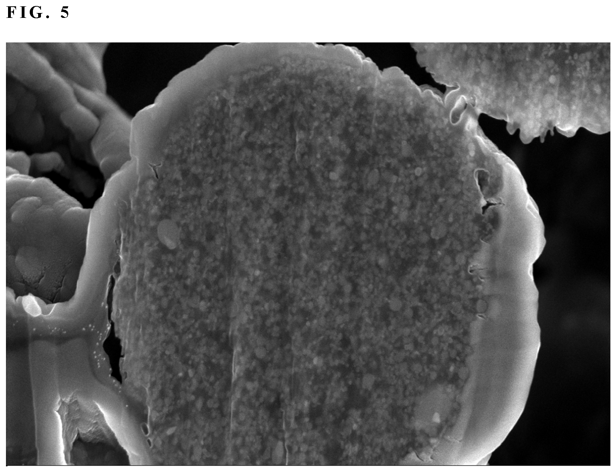

Cross-section of the negative electrode active material: The cross-section of the negative electrode active material of example 1 was evaluated by SEM, and the image is shown in FIG. 5. Referring to FIG. 5, in the cross-section of the negative electrode active material of Example 1, it can be seen that monocrystalline silicon particles were uniformly distributed.

### (Experimental 2) Evaluation of battery properties

### Specific capacity (mAh/g) and initial efficiency (%)

Negative electrode active materials were prepared according to the examples and comparative examples.

A negative electrode active material slurry for each of the negative electrode active materials of the examples and comparative examples was prepared by mixing 60 wt% of the prepared silicon-carbon composite as a negative electrode active material, 20 wt% of styrene butadiene rubber (SBR) as a binder, and 20 wt% of carboxymethyl cellulose in distilled water. A negative electrode was made by coating a copper foil with the negative electrode active material slurry, and drying and pressing the resulting copper foil. Coin-type half-cell was made using the negative electrode, a lithium metal counter electrode, and an electrolyte. The electrolyte was a mixed solvent of ethylene carbonate and dimethyl carbonate (3:7 volume ratio) in which 1M LiPF₆ is dissolved.

The coin-type half-cells were charged and discharged once at 0.1 C in the range from 0.01 to 1.5 V, thereby measuring charge capacity and discharge capacity.

Specific capacity is obtained by dividing the measured discharge capacity by the content of the negative electrode active material. Initial efficiency is the ratio of the discharge capacity to the charge capacity (discharge capacity/charge capacity).

### Cycle life retention (%)

Negative electrode active materials were prepared according to the examples and comparative examples.

A negative electrode active material slurry was prepared with 97.5 wt% of the mixed negative electrode active material of the prepared silicon-carbon composite and graphite. The weight ratio of the silicon-carbon composite to graphite was designed according to a capacity of a negative electrode of 500 mAh/g. The mixed negative electrode active material was mixed with 1.5 wt% of carboxymethyl cellulose, and 1 wt% of styrene butadiene rubber in distilled water to form the slurry. in each case,the prepared negative electrode active material slurry was coated on a copper foil, dried, and rolled to thereby make a negative electrode.

A positive electrode active material slurry was prepared by mixing 96 wt% of LiNi_{0.88}Co_{0.11}Al_{0.01}O₂ as a positive electrode active material, 2 wt% of polyvinylidene fluoride as a binder, and 23 wt% of Ketjen black as a conductive material in N-methyl pyrrolidone. The prepared positive electrode active material slurry was coated on an aluminum foil, dried and pressed, thereby make a positive electrode.

Coin-type full cells were made in a conventional method using the negative electrode, a positive electrode, and an electrolyte (1M LiPF₆-dissolved mixed solvent of ethylene carbonate and dimethyl carbonate (30:70 volume ratio)).

The coin-type full cells were subjected to initial charging/discharging under the following conditions: charged at 25 °C at a constant current (CC) of 0.1 C up to 4.2 V, then at a constant voltage down to 0.01 C, and discharged at 0.1 C down to 2.5 V. Subsequently, the cells were charged and discharged 200 times at 25 °C in the voltage range of 3.0 V to 4.0 V, with both the charge and discharge rates wet to 1.0 C. The ratio of discharge capacity after 200 cycles to the initial discharge capacity was calculated, and is shown as cycle life retention in Tables 1 and 2.

**Table 1**

| | Silicon crystal | Grain size (nm) | Primary silicon particle size (nm) | Oxygen concentration in secondary silicon particle (wt%) | Oxygen concentration in silicon-carbon composite (wt%) |
|---|---|---|---|---|---|
| Example 1 | Monocry stalline | 14 | 15 | 6.6 | 3.6 |
| Example 2 | Monocry stalline | 19 | 19 | 6.9 | 4.0 |
| Example 3 | Monocry stalline | 24 | 26 | 6.5 | 4.0 |
| Comparat ive Example 1 | Polycrys talline | 15 | 62 | 7.3 | 8.0 |
| Comparat ive Example 2 | Polycrys talline | 30 | 62 | 6.9 | 6.9 |
| Comparat ive Example 3 | Monocry stalline | 53 | 53 | 6.6 | 4.0 |
| Comparat ive Example 4 | Monocry stalline | 24 | 29 | 6.6 | 4.2 |
| Comparat ive Example 5 | Polycrys talline | 11 | 100 | 8.9 | 13.4 |
| Comparat ive Example 6 | Polycrys talline | 13 | 100 | 5.6 | 7.6 |
| Comparat ive Example 7 | Polycrys talline | 30 | 100 | 3.2 | 6.1 |

**Table 2**

| | Silicon crystal | Average size (D50) of silicon-carbon composite (µm) | Specifi c capacit y | Initial efficienc y | Cycle life retenti on |
|---|---|---|---|---|---|
| Example 1 | Monocrystall ine | 8.0 | 1801 | 89.7 | 93.6 |
| Example 2 | Monocrystall ine | 8.1 | 1760 | 88.4 | 93.1 |
| Example 3 | Monocrystall ine | 7.9 | 1776 | 88.8 | 92.1 |
| Compara tive Example 1 | Polycrystalli ne | 8.2 | 1618 | 86.7 | 92.1 |
| Compara tive Example 2 | Polycrystalli ne | 8.1 | 1699 | 87.1 | 71.2 |
| Compara tive Example 3 | Monocrystall ine | 7.8 | 1782 | 88.3 | 40.4 |
| Compara tive Example 4 | Monocrystall ine | 7.8 | 1780 | 88.2 | 80.2 |
| Compara tive Example 5 | Polycrystalli ne | 8.0 | 1501 | 85.0 | 93.2 |
| Compara tive Example 6 | Polycrystalli ne | 8.3 | 1680 | 87.1 | 92.7 |
| Compara tive Example 7 | Polycrystalli ne | 8.0 | 1750 | 87.5 | 69.9 |

As shown in Tables 1 and 2, the negative electrode active materials of the examples had a low oxygen concentration, improved specific capacity, improved initial efficiency, and a long lifespan. However, as shown in Table 1, the comparative examples did not exhibit the combination of low oxygen concentration, improved specific capacity, improved initial efficiency, and/or long lifespan.

Although the preferred embodiments of the present disclosure have been described above, the present disclosure is not limited thereto.

## Claims

1. A negative electrode active material for a rechargeable lithium battery, comprising:
a silicon-carbon composite including secondary particles and amorphous carbon, the secondary particles are assemblies of monocrystalline silicon nanoparticles,
wherein the silicon-carbon composite has an oxygen content of 4.0 wt% or less, and
wherein the monocrystalline silicon nanoparticles have a D50 average size of 30 nm or less.

2. The negative electrode active material of claim 1, wherein the monocrystalline silicon nanoparticles have a D50 grain size of 25 nm or less.

3. The negative electrode active material of claim 1 or 2, wherein the difference between the D50 average size of the monocrystalline silicon nanoparticles and the D50 grain size of the monocrystalline silicon nanoparticles is 3 nm or less.

4. The negative electrode active material of any of the claims 1 to 3, wherein the inter-particle spacing between the monocrystalline silicon nanoparticles is 5 nm or less.

5. The negative electrode active material of any of the claims 1 to 4, wherein the silicon nanoparticles are included at 50 to 95 wt% in the silicon-carbon composite and the amorphous carbon is included at 5 to 50 wt% in the silicon-carbon composite.

6. The negative electrode active material of any of the claims 1 to 5, wherein the silicon-carbon composite includes a core containing secondary particles in which the monocrystalline silicon nanoparticles are assembled; and an amorphous carbon layer that surrounds the core.

7. The negative electrode active material of any of the claims 1 to 6, wherein the core further contains amorphous carbon.

8. The negative electrode active material of any of the claims 1 to 7, wherein a D50 average size of the silicon-carbon composite is 2 to 15 µm.

9. The negative electrode active material of any of the claims 1 to 8, wherein the amorphous carbon is soft carbon, hard carbon, mesophase pitch carbon, calcined coke, or a combination thereof.

10. A rechargeable lithium battery (100), comprising:
a negative electrode (20) comprising the negative electrode active material for a rechargeable lithium battery of any of the claims 1 to 9; and
a positive electrode (10).
